# EUROPEAN PATENT APPLICATION

(11) **EP 3 076 538 A1**
(43) Date of publication of application: **05.10.2016**
(21) Application number: 14866197.8
(22) Date of filing: 15.10.2014
(51) Int. Cl.: H02M 7/12, H02M 3/28

(54) **FLYBACK AC-DC CONVERSION DEVICE AND CONVERSION METHOD THEREOF**

(30) Priority: 27.11.2013 CN 201310616349
(71) Applicant: Hep Tech Co. Ltd., 408 Taichung City (TW)
(72) Inventor: PAN, Chingtsai, Hsinchu City 300 (TW); CHEN, Poyan, Taipei City 116 (TW); HUNG, Tasheng, Taichung City 408 (TW)
(74) Representative: Reichart, Sebastian
(86) International application number: PCT/CN2014/000914
(87) International publication number: WO 2015/078095

(57) **Abstract**

A flyback AC-DC conversion device and the conversion method thereof are provided. The device includes a rectifier circuit (R), an electronic switch (SW) and a flyback transformer (10) and an automatic charge pumping circuit (20), wherein the flyback transformer (10) is provided with a primary side and a secondary side, wherein the primary side is electrically connected to the rectifier circuit (R) and the electronic switch (SW); and one side of the automatic charge pumping circuit (20) is electrically connected to the secondary side of the flyback transformer (10), and the other side thereof is electrically connected to a load (200) so as to improve the conversion efficiency of a power source and be capable of restraining the ripple of an output voltage. Additionally, further disclosed is a power conversion method for the flyback AC-DC conversion device.

## Description

### TECHNICAL FIELD

The present disclosure relates to power conversion, in particular to a flyback AC-DC conversion device and the conversion method thereof

### BACKGROUND

The most obvious different between a flyback electricity energy transmission system and a common contact-type energy transmission is that the flyback electricity energy transmission system does not need to directly transmit the electricity energy via the power lines, but transmit the electricity energy from the primary side to the secondary side via the electromagnetic coupling of the flyback transformer; however, due to the poor coupling of the flyback transformer, the power conversion efficiency will be decreased. Thus, the conventional flyback electricity energy transmission system usually uses the resonant-type impedance matching method to increase the power conversion efficiency; however, the circuit realized by the resonant-type impedance matching method tends to be influenced by the coupling coefficients of the flyback transformer, so cannot reach the anticipated effect, which will reduce the power conversion efficiency.

In addition, as the output voltage of the electricity energy transmission system should be higher than the voltage of the load so as to overcome the potential of the output end to transmit the electricity energy to the load; thus, the flyback electricity energy transmission system always needs a transformer with high turn ratio to increase the voltage to the desired voltage; in this way, the copper loss of the flyback transformer will be increased with the increase of turn number of the coil, which will reduce the power conversion efficiency.

Accordingly, the usage and structure of the aforementioned currently available flyback electricity energy transmission system still have a lot of inconveniences and shortcomings needed to be further improved. For the purpose of solving the existing problems, a lot of circuit designers have kept trying hard to find a solution, but a proper solution has yet to be successfully developed until now; besides, the currently available products have no proper structure to solve the above problems, which currently become the most serious problems that the circuit designers need to solve in a short time.

### SUMMARY

The major object of the present invention is to provide a flyback AC-DC conversion device, which can provide negative potential to compensate for the barrier of the load voltage so as to further reduce the coil turn ratio of the transformer and reduce the copper loss to increase the power conversion efficiency; therefore, the electricity energy of the primary side of the transformer can be more smoothly and efficiently transmitted to the load in order to further better the power conversion efficiency.

The object of the present invention can be realized by adopting the following technical schemes. The present invention provides a flyback AC-DC conversion device for converting the electricity energy of an AC power source and outputting the electricity energy to a load; the flyback AC-DC conversion device includes: a rectifier circuit, which is connected to the AC power source, and used for receiving the electricity energy of the AC power source, converting the electricity energy into the DC electricity energy and outputting the DC electricity energy; an electronic switch, which is electrically connected to the rectifier circuit; a flyback transformer, which has a primary side and a secondary side, and two terminals of the primary side are electrically connected to the rectifier circuit and the electronic switch respectively, and the secondary side has a first terminal and a second terminal; and the automatic charge pumping circuit, wherein one side thereof is electrically connected to the flyback transformer, and the other side thereof is electrically connected to the load; the automatic charge pumping circuit includes: a first diode, wherein the anode thereof is connected to the second terminal of the secondary side, and the cathode thereof is connected to the first terminal of the secondary side; a first capacitor, wherein one end thereof is connected to the cathode of the first diode; an inductor, wherein one end thereof is connected to the other end of the first capacitor, and the other end thereof is electrically connected to the cathode of the first diode; a second capacitor connected to the load in parallel, wherein one end thereof is connected to the first capacitor and the inductor, and the other end thereof is connected to the anode of the first diode and the second terminal of the secondary side.

The object of the present invention can be further realized by adopting the following technical measures.

Preferably, regarding the aforementioned flyback AC-DC conversion device, the automatic charge pumping circuit further includes a second diode; one end thereof is connected to the first terminal of the secondary side of the flyback transformer, and the other end thereof is connected to the cathode of the first diode, whereby the first diode is electrically connected to the first terminal of the secondary side of the flyback transformer via the second diode.

Preferably, regarding the aforementioned flyback AC-DC conversion device, the anode of the second diode is connected to the first terminal of the secondary side of the flyback transformer, and the cathode thereof is connected to the cathode of the first diode.

Preferably, regarding the aforementioned flyback AC-DC conversion device, the automatic charge pumping circuit further includes a third diode; one end thereof is connected to the cathode of the first diode, and the other end thereof is connected to the inductor, whereby the inductor is electrically connected to the cathode of the first diode via the third diode.

Preferably, regarding the aforementioned flyback AC-DC conversion device, the anode of the third diode is connected to the anode of the first diode, and the cathode thereof is connected to the inductor.

The object of the present invention can be realized by adopting the following technical schemes. The present invention provides a power conversion method of the aforementioned flyback AC-DC conversion device, including the following steps: A. turning on the electronic switch to charge the primary side of the flyback transformer by the DC electricity energy outputted by the rectifier circuit, and powering the load by the inductor, the first capacitor and the second capacitor; B. turning off the electronic switch to make the rectifier circuit stop outputting the DC electricity energy and make the secondary side of the flyback transformer charge the inductor, the first capacitor and the second capacitor, and make the second capacitor keep powering the load; C. the flyback transformer stopping charging to make the inductor charge the first capacitor, and reverse the polarity of the voltage across the first capacitor, and powering the load by the second capacitor; D. turning on the first diode to reverse the polarity of the voltage across the first capacitor and the polarity of the voltage across the inductor to charge the second capacitor, and making the second capacitor keep powering the load.

The object of the present invention can be realized by adopting the following technical measures.

Preferably, the aforementioned power conversion method further includes a step after the step D, and the step is to repeat executing the step A to the step D.

Preferably, regarding the aforementioned power conversion method, during the step B, the secondary side of the flyback transformer charges the second capacitor via the resonant circuit formed by the first capacitor and the inductor.

Preferably, regarding the aforementioned power conversion method, during the step C, after the first capacitor and the inductor form the resonant circuit, the inductor charges the first capacitor to reverse the polarity of the voltage across the first capacitor; when the voltage across the inductor is higher than the voltage across the second capacitor, the first diode is turned on, and the method proceeds to the step D.

By means of the above technical schemes, the flyback AC-DC conversion device and the conversion method thereof in accordance with the present invention have at least the following advantages and beneficial effects: via the design of the present invention, the device can provide negative potential to compensate for the barrier of the load voltage so as to further reduce the coil turn ratio of the flyback transformer and reduce the copper loss to increase the power conversion efficiency; therefore, the electricity energy of the primary side of the transformer can be more smoothly and efficiently transmitted to the load in order to further better the power conversion efficiency.

Further scope of applicability of the present application will become more apparent from the detailed description given hereinafter. However, it should be understood that the detailed description and specific examples, while indicating exemplary embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

FIG. 1 is a circuit diagram of a preferred embodiment of a flyback AC-DC conversion device in accordance with the present invention.
FIG. 2 ∼ FIG. 5 are the equivalent circuit diagrams of all steps.
FIG. 6 is a voltage waveform diagram of the first capacitor.

### DETAILED DESCRIPTION

The technical content of the present invention will become apparent by the detailed description of the following embodiments and the illustration of related drawings as follows.

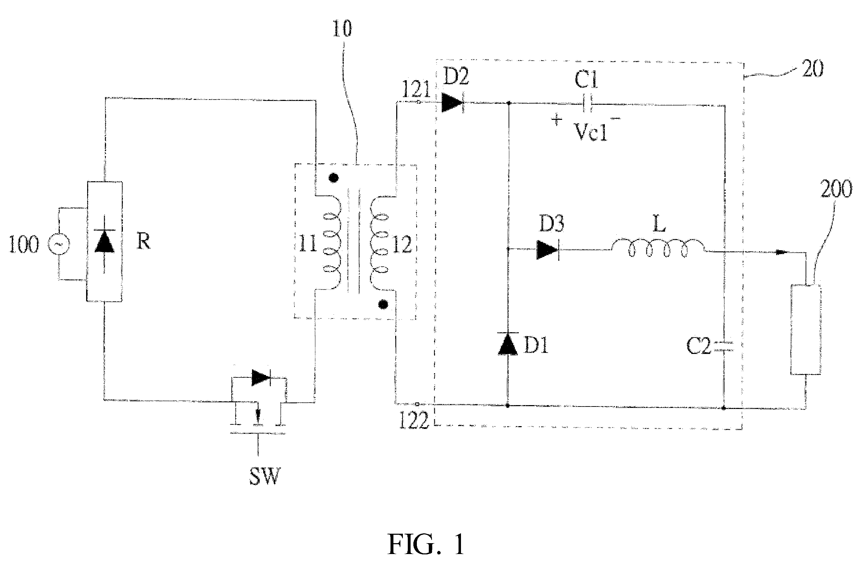

Please refer to FIG. 1, which is a preferred embodiment of a flyback AC-DC conversion device in accordance with the present invention; the flyback AC-DC conversion device is used for converting the electricity energy of an AC power source 100 and outputting the electricity energy to a load 200. The flyback AC-DC conversion device includes a rectifier circuit R, an electronic switch SW and a flyback transformer 10 and an automatic charge pumping circuit 20, wherein:

The rectifier circuit R is connected to the AC power source 100; in the embodiment, the rectifier circuit R is a bridge rectifier, and used for receiving the electricity energy of the AC power source, converting the electricity energy into the DC electricity energy and outputting the DC electricity energy. Of course, in another embodiment, the rectifier circuit R can be a center-tapped type rectifier, a vacuum-tube type rectifier and the like, which can also achieve the same object.

The electronic switch SW is electrically connected to the rectifier circuit R to be controlled to turn on or turn off the DC electricity energy outputted by the rectifier circuit R.

The flyback transformer 10 has a primary side 11 and a secondary side 12. Two terminals of the primary side 11 is electrically connected to the rectifier circuit R and the electronic switch SW respectively, and the secondary side 12 has a first terminal 121 and a second terminal 122.

One side of the automatic charge pumping circuit 20 is electrically connected to the flyback transformer 10, and the other side thereof is electrically connected to the load 200. The automatic charge pumping circuit 20 includes 3 diodes (the first diode D1, the second diode D2 and the third diode D3), 2 capacitors (the first capacitor C1 and the second capacitor C2) and an inductor L. The connection relations of the above components are as follows:

The anode of the first diode D1 is connected to the second terminal 122 of the secondary side 12, and the cathode thereof is connected to the first terminal 121 of the secondary side 12.

One end of the first capacitor C is connected to the cathode of the first diode D1 and the cathode of the second diode D2.

One end of the inductor L is connected to the other end of the first capacitor C1, and the other end thereof is connected to the cathode of the third diode D3 so as to be electrically connected to the cathode of the first diode D1 via the third diode D3.

The second capacitor C2 is connected to the load 200 in parallel and is a non-electrolyte capacitor; one end thereof is connected to the first capacitor C1 and the inductor L, and the other end thereof is connected to the anode of the first diode D1 and the second terminal 122 of the secondary side 12.

In the embodiment, the specifications of the capacitors C1∼C2, the inductor L, the input voltage, the switching frequency of the electronic switch SW and the load 200 are as shown in the following Table 1:

**Table 1**

| | |
|---|---|
| Inductor L | 100µH |
| First capacitor C1 | 0.1µF |
| Second capacitor C2 | 10µF |
| Input voltage Vin | 110V |
| Output voltage Vout | 15V |
| Switching frequency | 100KHz |
| Load resistance | 5Ω |

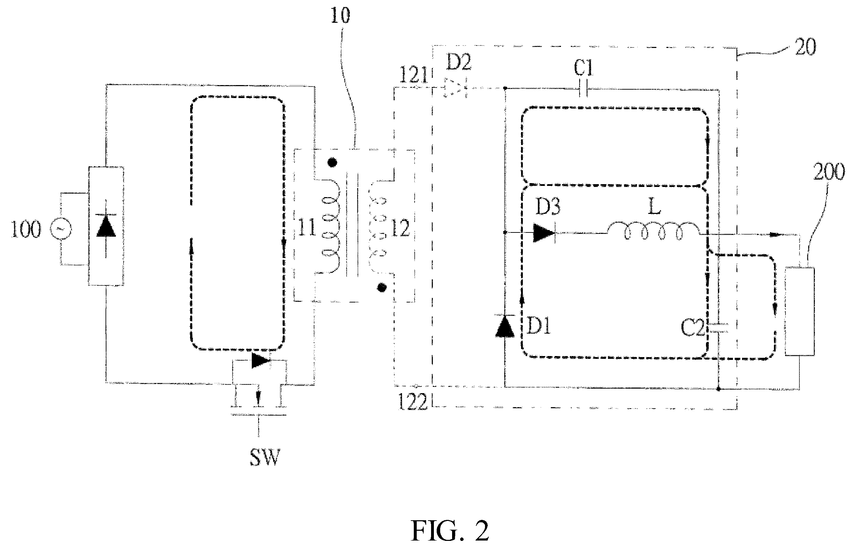

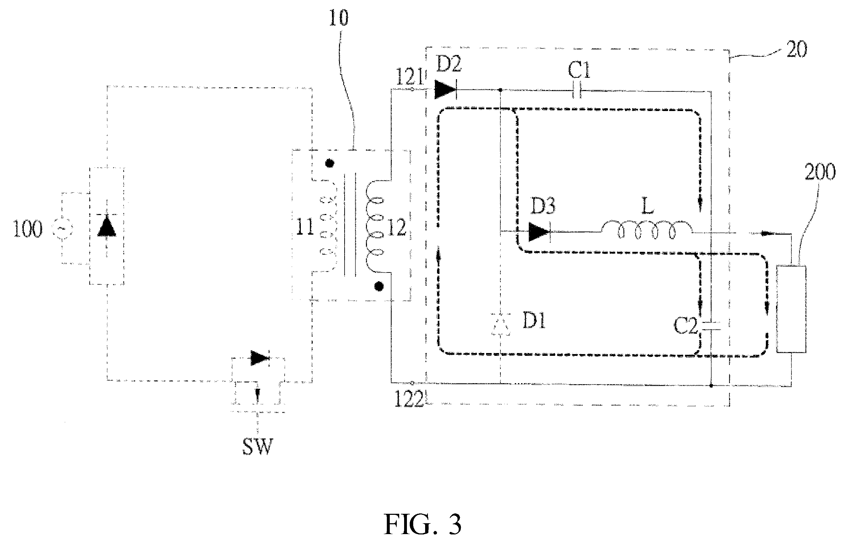

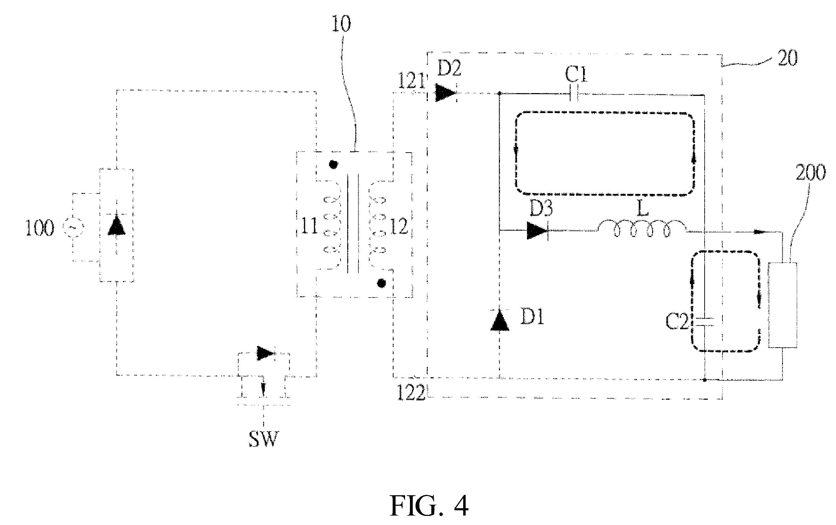

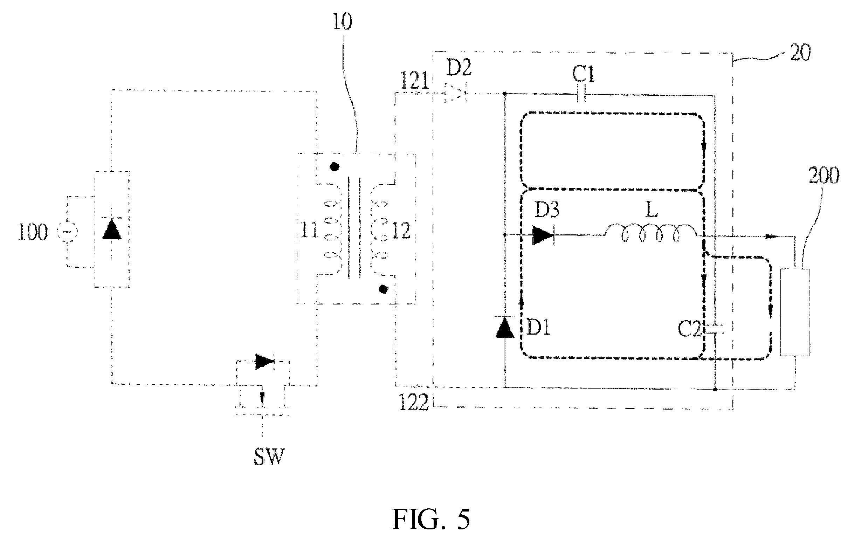

The object of bettering the power conversion efficiency can be achieved by integrating the above structure design and specification with the following power conversion method; the method includes the following steps:
A. please refer to FIG. 2, turning on the electronic switch SW to charge the primary side 11 of the flyback transformer 10 by the DC electricity energy outputted from the rectifier circuit R, and powering the load 200 by the inductor L, the first capacitor C1 and the second capacitor C2.
B. please refer to FIG. 3, turning off the electronic switch SW to make the rectifier circuit R stop outputting the DC electricity to make the secondary side 12 of the flyback transformer 10 charge the inductor L and the first capacitor C1, and charging the second capacitor C2 via the resonant circuit formed by the first capacitor C1 and the inductor L so as to make the second capacitor C2 keep powering the load 200.
C. please refer to FIG. 4, when the flyback transformer 10 stops charging, the first capacitor C1 and the inductor L start to be in resonance to make the inductor L charge the first capacitor C1 and reverse the polarity of the voltage across the first capacitor C1; in the meanwhile, the second capacitor C2 keeps charging the load 200.
D. please refer to FIG. 5, when the voltage across the inductor L is higher than the voltage across the second capacitor C2, the first diode is turned on to reverse the polarity of the voltage across the first capacitor C1 and the polarity of the voltage across the inductor L in the step C and then charge the second capacitor C2; then the second capacitor C2 keeps powering the load 200.

After each of the step A ∼ step D is executed for one time, it means one operation cycle is finished. Thus, when the flyback AC-DC conversion device keeps being in operation, the step A ∼ step D will be repeatedly executed after the step D until the flyback AC-DC conversion device is turned off.

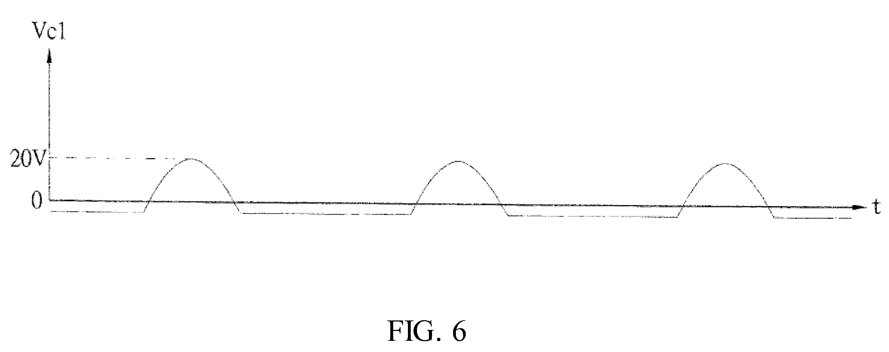

By means of the above design of the flyback AC-DC conversion device, in each operation cycle, the voltage Vc1 across the first capacitor C1 can automatically provide negative potential, as shown in FIG. 6, to turn on the first diode D1 to completely change the circuit structure and compensate for the barrier generated from the voltage of the load 200 via the negative potential. In this way, the coil turn ratio of the flyback AC-DC conversion device can be reduced to further reduce the copper loss, which can not only make the electricity energy of the primary side of the flyback transformer 10 be able to smoothly transmitted to the load 200 to further improve the power conversion efficiency, but also can decrease the ripple of the output voltage to further increase the service life of the second capacitor C2.

Moreover, the design of the second diode D2 and the third diode D3 can further effectively prevent the backflow of the circuit from influencing the operations of the flyback transformer 10 and the automatic charge pumping circuit 20 respectively, which can make the whole circuit more stable so as to better the power conversion and the ripple voltage suppression effect of the flyback AC-DC conversion device. Of course, in practice, the objects of increasing the power conversion efficiency and the ripple voltage suppression effect can be still achieved without the second diode D2 and the third diode D3.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A flyback AC-DC conversion device, **characterized in** being used for converting an electricity energy of an AC power source and then supplying the electricity energy to a load; the flyback AC-DC conversion device comprising:
a rectifier circuit, connected to the AC power source, and used for receiving the electricity energy of the AC power source, converting the electricity energy into a DC electricity energy and outputting the DC electricity energy;
an electronic switch, electrically connected to the rectifier circuit;
a flyback transformer, having a primary side and a secondary side, and two terminals of the primary side being electrically connected to the rectifier circuit and the electronic switch respectively, and the secondary side having a first terminal and a second terminal; and
an automatic charge pumping circuit, one side of the automatic charge pumping circuit being electrically connected to the flyback transformer, and the other side of the automatic charge pumping circuit being electrically connected to the load; the automatic charge pumping circuit comprising:
a first diode, an anode of the first diode being connected to the second terminal of the secondary side, and a cathode of the first diode being connected to the first terminal of the secondary side;
a first capacitor, one end of the first capacitor being connected to the cathode of the first diode;
an inductor, one end of the inductor being connected to the other end of the first capacitor, and the other end of the inductor being electrically connected to the cathode of the first diode;
a second capacitor, connected to the load in parallel, and one end of the second capacitor being connected to the first capacitor and the inductor, and the other end of the second capacitor being connected to the anode of the first diode and the second terminal of the secondary side.

2. The flyback AC-DC conversion device of claim 1, **characterized in that** the automatic charge pumping circuit further comprises a second diode; one end of the second diode is connected to the first terminal of the secondary side of the flyback transformer, and the other end of the second diode is connected to the cathode of the first diode, whereby the first diode is electrically connected to the first terminal of the secondary side of the flyback transformer via the second diode.

3. The flyback AC-DC conversion device of claim 2, **characterized in that** an anode of the second diode is connected to the first terminal of the secondary side of the flyback transformer, and a cathode of the second diode is connected to the cathode of the first diode.

4. The flyback AC-DC conversion device of claim 1, **characterized in that** the automatic charge pumping circuit further comprises a third diode; one end of the third diode is connected to the cathode of the first diode, and the other end of the third diode is connected to the inductor, whereby the inductor is electrically connected to the cathode of the first diode via the third diode.

5. The flyback AC-DC conversion device of claim 4, **characterized in that** an anode of the third diode is connected to the anode of the first diode, and a cathode of the third diode is connected to the inductor.

6. A power conversion method of the flyback AC-DC conversion device of claim 1, **characterized in** comprising the following steps:
A. turning on the electronic switch to charge the primary side of the flyback transformer by the DC electricity energy outputted by the rectifier circuit, and powering the load by the inductor, the first capacitor and the second capacitor;
B. turning off the electronic switch to make the rectifier circuit stop outputting the DC electricity to make the secondary side of the flyback transformer charge the inductor, the first capacitor and the second capacitor, and make the second capacitor keep powering the load;
C. the flyback transformer stopping charging to make the inductor charge the first capacitor, and reversing a polarity of a voltage across the first capacitor, and powering the load by the second capacitor;
D. turning on the first diode to reverse the polarity of the voltage across the first capacitor and a polarity of a voltage across the inductor to charge the second capacitor, and making the second capacitor keep powering the load.

7. The power conversion method of claim 6, **characterized in** further comprising a step after the step D, and the step being to repeat executing the step A to the step D.

8. The power conversion method of claim 6, **characterized in that** during the step B, the secondary side of the flyback transformer charges the second capacitor via a resonant circuit formed by the first capacitor and the inductor.

9. The power conversion method of claim 8, **characterized in that** during the step C, after the first capacitor and the inductor form the resonant circuit, the inductor charges the first capacitor to reverse the polarity of the voltage across the first capacitor; when the voltage across the inductor is higher than a voltage across the second capacitor, the first diode is turned on, and the method proceeds to the step D.
